# EUROPÄISCHE PATENTSCHRIFT

(11) **EP 2 021 595 B1**
(45) Veröffentlichungstag und Bekanntmachung des Hinweises auf die Patenterteilung: **28.04.2010**
(21) Anmeldenummer: 07725362.3
(22) Anmeldetag: 18.05.2007
(51) Int. Cl.: F01P 7/16, G05D 23/02, G05D 23/13

(54) **THERMOSTATVENTIL**
THERMOSTATIC VALVE
SOUPAPE THERMOSTATIQUE

(30) Priorität: 23.05.2006 DE 102006025064
(43) Veröffentlichungstag der Anmeldung: 11.02.2009
(73) Patentinhaber: Behr Thermot-tronik GmbH, 70806 Kornwestheim (DE)
(72) Erfinder: AUWEDER, Andreas, 71665 Vaihingen/Enz (DE); WILLERS, Eike, 70469 Stuttgart (DE)
(74) Vertreter: Patentanwälte Ruff, Wilhelm, Beier, Dauster & Partner
(86) Internationale Anmeldenummer: PCT/EP2007/004454
(87) Internationale Veröffentlichungsnummer: WO 2007/134808

(56) Entgegenhaltungen:
- WO-A-2005/088098
- DE-A1- 10 318 813
- FR-A1- 2 601 719
- JP-A- 1 125 516

## Beschreibung

Die Erfindung betrifft ein Thermostatventil für eine Kühlanlage eines Verbrennungsmotors mit einem in einer Ventilkammer anzuordnenden thermostatischen Arbeitselement, das als Antriebselement für ein zwischen einem Motoraustritt und einem zu einem Kühlmittelkühler führenden Anschluss anzuordnendes Hauptventilelement und für ein zwischen dem Motoraustritt und einem Motoreintritt anzuordnendes, als Ventilschieber gestaltetes Kurzschlussventilelement dient, das eine Überdruckventilfunktion besitzt.

Um bei dem Starten eines Verbrennungsmotors mit kaltem Kühlmittel die Warmlaufphase zu verkürzen und dadurch die Verbrennung zu verbessern, ist es bekannt, während der Warmlaufphase sowohl das Hauptventil als auch das Kurzschlussventil geschlossen zu halten. Um thermische und / oder mechanische Beschädigungen des Verbrennungsmotors und dazugehörender Komponente zu verhindern, wenn der Verbrennungsmotor in kaltem Zustand mit hohen Motordrehzahlen betrieben wird, ist ein Überdruckventil vorgesehen, das bei erhöhter Motordrehzahl und entsprechend erhöhtem Druck öffnet und ein Strömen von Kühlmittel von dem Motoraustritt zu dem Motoreintritt ermöglicht. Dabei ist es bekannt (DE 102004021009 A1), das Kurzschlussventilelement als Überdruckventil zu gestalten.

Der Erfindung liegt die Aufgabe zugrunde, ein möglichst einfaches und in Längsrichtung des thermostatischen Arbeitselementes möglichst kurzbauendes Thermostatventil der eingangs genannten Art zu schaffen.

Diese Aufgabe wird dadurch gelöst, dass das Kurzschlussventilelement zusätzlich zu dem Ventilschieber mit einem Ventilteller versehen ist, der in Ausfahrrichtung des thermostatischen Arbeitselementes dem Ventilschieber vorgeordnet ist, und dass dem Ventilschieber und dem Ventilteller ein Bauteil zugeordnet ist, das sowohl einen Ventilsitz für den Ventilschieber als auch ein Ventilsitz für den Ventilteller bildet.

Aufgrund dieser Ausbildung ist eine konstruktiv einfache Gestaltung möglich.

In Ausgestaltung der Erfindung wird vorgesehen, dass in Ausfahrrichtung des thermostatischen Arbeitselementes ein Abstand zwischen dem Ventilschieber und dem Ventilteller des Kurzschlussventilelementes vorgesehen ist. Dadurch ergibt sich zusätzlich zu der Funktion des Überdruckventils die Funktion, dass bei einem Ansprechen des thermostatischen Arbeitselementes zunächst das Kurzschlussventil (und danach das Hauptventil) geöffnet werden und dass erst bei Erreichen einer vorgegebenen Temperatur das Kurzschlussventil wieder geschlossen wird.

In weiterer Ausgestaltung der Erfindung wird vorgesehen, dass das gemeinsame Bauteil an einer vorgegebenen Position dichtend in eine Aufnahme eines Motorblocks oder eines Zylinderkopfes einsetzbar ist. Damit wird sichergestellt, dass an dem Motorblock oder dem Zylinderkopf keine Bearbeitungen vorgenommen werden müssen oder eine Auflagefläche für eine Feder gebildet werden muss, um die Funktion des Kurzschlussventils und des Überdruckventils zu erhalten.

In weiterer Ausgestaltung der Erfindung wird vorgesehen, dass ein Ventiloberteil mit dem thermostatischen Arbeitselement, dem Hauptventilelement, der Rückstellfeder, dem Kurzschlussventilelement, der Überdruckfeder und dem den Ventilsitz für das Schieberventil und das Kurzschlussventil bildende Bauteil eine fertige Baueinheit bildet. Die fertige Baueinheit ist in dem Herstellerwerk des Thermostatventils herstellbar und auf seine Funktion prüfbar. Es muss nur noch in den entsprechenden Verbrennungsmotor montiert werden, ohne dass an diesem Einstellarbeiten oder sonstige Arbeiten vorgenommen werden müssen.

Weitere Merkmale und Vorteile der Erfindung ergeben sich aus der nachfolgenden Beschreibung der in der Zeichnung dargestellten Ausführungsform und den Unteransprüchen.
- Fig. 1: zeigt einen Axialschnitt durch ein Ausführungsbeispiel eines erfindungsgemäßen Thermostatventils in kaltem Zustand,
- Fig. 2: den Schnitt durch das Thermostatventil der Fig. 1 bei Ansprechen der Überdruckfunktion,
- Fig. 3: den Schnitt durch das Thermostatventil der Fig. 1 bei geöffnetem Hauptventil und geschlossenem Kurzschlussventil und
- Fig.4: einen Teil-Axialschnitt durch eine als Gehäusethermostat ausgebildete Ausführungsform.

Das in den Zeichnungen dargestellte Thermostatventil besitzt ein deckelartiges Ventiloberteil 10, das mit einem flanschartigen Teil an einem strichpunktiert angedeutetem Motorblock 11 oder Zylinderkopf eines Verbrennungsmotors anbringbar ist. Das Ventiloberteil 10 nimmt ein thermostatisches Arbeitselement 12 auf, das in eingebautem Zustand in eine Verteilerkammer hineinragt. Das thermostatische Arbeitselement 12 besitzt ein Gehäuse 13, in welchem ein Dehnstoff angeordnet ist, beispielsweise eine Wachsmischung. Dieser Dehnstoff ändert temperaturabhängig sein Volumen und treibt bei einer entsprechenden Temperaturerhöhung einen Arbeitskolben 14 aus dem Gehäuse 13 aus. Bei seinem Ausfahren nimmt der Arbeitskolben 14 einen Ventilteller 15 mit, d.h. den Hauptventilteller. Der Hauptventilteller 15 bildet mit einem Ventilsitz 16 ein Hauptventil, das zwischen der Verteilerkammer und einem Anschluss 17 angeordnet ist, der zu einem Kühlmittelkühler führt. Der Anschluss 17 ist bei dem Ausführungsbeispiel als ein Schlauchanschluss ausgebildet.

Das Gehäuse 13 des thermostatischen Arbeitselementes 12 ist unter Zwischenfügen einer Kunststoffkappe 18 an dem Ventiloberteil 10 abgestützt. Der Hauptventilteller 15 besitzt einen käfigförmigen Mittelteil 19, der das Gehäuse 13 des thermostatischen Arbeitselementes 12 umgibt und dessen Boden mit dem Arbeitskolben 14 in Verbindung steht. Die Kunststoffkappe 18 ist mit einem Dichtungsring 20 versehen, der in dem geschlossenen Zustand dafür sorgt, dass der Hauptventilteller den Verteilerraum oder die Verteilerkammer gegenüber dem Anschluss 17 abdichtet. Bei einer abgewandelten Ausführungsform ist das Ventiloberteil 10 nicht aus Metall hergestellt, sondern aus Kunststoff. Bei dieser Ausführungsform ist dann die Kunststoffkappe 18 in das Ventiloberteil 10 integriert.

Auf den Arbeitskolben 14 ist ein Hut-förmiges Übertragungsteil 21 aufgesteckt, das den Boden des Mittelteils 19 des Hauptventiltellers 15 durchdringt. Das Übertragungsteil 21 besitzt eine dem Boden des Mittelteils 19 mit Abstand gegenüberliegende Ringschulter 31.

Das Gehäuse 13 liegt mit seinem aufgrund von Aussparungen des Mittelteils 19 des Hauptventiltellers 15 freigelegten Bereich in der Verteilerkammer, in der eine Motoraustrittsöffnung 9 mündet. Das Gehäuse 13 ist in dem der Verteilerkammer zugewandten Bereich (der in der Zeichnung unterhalb des Hauptventiltellers 15 liegende Bereich) dem von dem Motor kommenden Kühlmittel ausgesetzt.

Das Übertragungsteil 21 ist mit seinem zapfenartigen Abschnitt in eine Aussparung eines Kurzschlussventilelementes 22 eingesteckt. Das Kurzschlussventilelement 22 besitzt eine innere Aussparung, die das Mittelteil 19 des Hauptventiltellers 15 umgibt und die in ihrem Bodenbereich mit einer von Rippen umgebenden Führung für das Übertragungsteil 21 versehen ist.

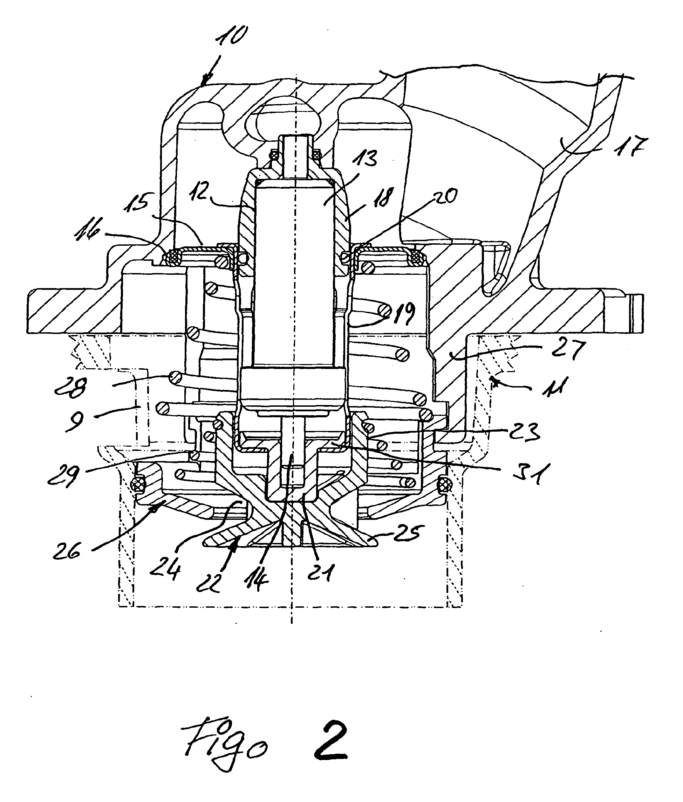

Das Kurzschlussventilelement 22 bildet mit einem zylindrischen Bereich einen Ventilschieber 23. An diesen Ventilschieber schließt in Ausfahrrichtung des Arbeitskolbens 14 eine Aussparung 24 an, die in einen Ventilteller 25 übergeht, der bei dem Ausführungsbeispiel in etwa konisch ist. Im Bereich des Ventiltellers 25 und im Bereich der Aussparung 24 sind Versteifungsrippen vorgesehen, die auch zur Führung des Kurzschlussventilelements 22 dienen, wenn dieses geöffnet ist (Fig. 2).

Dem Kurzschlussventilelement 22 ist ein Bauteil 26 zugeordnet, das eine ringförmige Gestalt aufweist und das dichtend in eine Bohrung eines Motorblocks 11 oder Zylinderkopfs eingesetzt wird. Es ist außen mit einer Ringnut und einer eingelegten Ringdichtung versehen. Das Bauteil 26 bildet sowohl für den Ventilteller 25 als auch für den Ventilschieber 23 des Kurzschlussventilelementes 22 die Ventilsitze. Der Ventilteller 25 legt sich gegen die Ausfahrrichtung des Arbeitskolbens 14 an die mittlere Aussparung des Bauteils 26 an, das somit mit diesem Rand der mittleren Aussparung einen Ventilsitz bildet. Der Innendurchmesser der mittleren Aussparung des Bauteils 26 ist an den Außendurchmesser des Ventilschiebers 23 des Kurzschlussventilelementes 22 angepasst, dass dieser Innendurchmesser einen Schiebe-Ventilsitz für den Ventilschieber 23 bildet.

Das Bauteil 26 ist in drei oder mehr Finger 27 (eventuell auch nur zwei Finger) eingehängt, die von dem Ventiloberteil 10 abragen und sich in das Innere der Bohrung des Motorblocks 11 oder Zylinderkopfs erstrecken. Das Bauteil 26 dient als eine Abstützung für eine Rückstellfeder 28, die den Hauptventilteller 15 belastet und in seine Schließstellung drückt. Des weiteren dient das Bauteil 26 als eine Abstützung für eine Überdruckfeder 29, deren anderes Ende an dem Kurzschlussventilelement 22 fixiert ist, bei dem Ausführungsbeispiel in eine Ringnut eingerastet ist.

Die Überdruckfeder 29 ist so dimensioniert, dass sie über das Kurzschlussventilelement 22 und das Übertragungselement 21 den Arbeitskolben 14 vollständig in das Gehäuse 13 des thermostatischen Arbeitselementes 12 zurückschieben kann. Darüber hinaus ist die Überdruckfeder 29 auf eine Überdruckventilfunktion ausgelegt. Die Auslegung ist derart, dass sie nachgibt, wenn auf die freie, der Verteilerkammer zugewandte Fläche des Ventiltellers 25 ein bestimmter Druck einwirkt. Die Öffnungskraft des Überdruckventils ist somit einmal von der Größe des Überdrucks in der Verteilerkammer und zum anderen von der Größe der freien Fläche des Ventiltellers 25 abhängig, die mit dem unter Druck stehenden Medium beaufschlagt ist.

Wie schon erwähnt wurde, mündet ein Motoraustritt in die Verteilkammer zwischen dem Bauteil 26 und dem Hauptventilteller 15. Das Bauteil 26 ist einer Motoreintrittsöffnung 8 vorgeschaltet, d.h. das Bauteil 26 trennt die Verteilkammer von dem Motoreintritt.

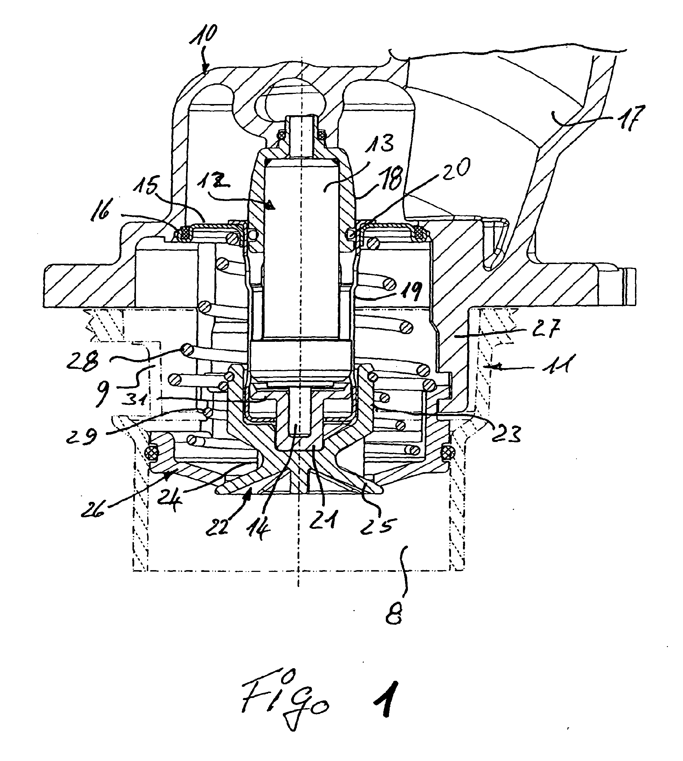

Bei kaltem Verbrennungsmotor und kaltem Kühlmittel befindet sich das Thermostatventil in der Stellung nach Fig. 1, d.h. der Hauptventilteller 15 ist geschlossen. Ebenso ist das Kurzschlussventil geschlossen, da der Ventilteller 25 des Kurzschlussventilelementes 22 an seinem von dem Bauteil 26 gebildeten Ventilsitz anliegt.

Falls der Verbrennungsmotor, bevor das Kühlmittel nennenswert erwärmt worden ist, mit erhöhter Motordrehzahl betrieben wird, so wird in der Verteilerkammer der Druck des Kühlmittels erhöht. Um mechanische und / oder thermische Schädigungen des Verbrennungsmotors und / oder damit in Verbindung stehender Komponenten zu vermeiden, wird in diesem Fall eine Überdruckfunktion ausgenutzt, in dem der Ventilteller 25 von seinem von dem Bauteil 26 gebildeten Sitz abhebt und eine Kurzschlussverbindung zwischen dem Austritt 9 des Verbrennungsmotors und dem Motoreintritt 8 freigibt.

Wenn die Temperatur des Verbrennungsmotors und damit des Kühlmittels die Ansprechtemperatur des thermostatischen Arbeitselementes 12 erreicht hat, fährt der Arbeitskolben 14 aus dem Gehäuse 13 aus. Dabei wird zunächst das Kurzschlussventil geöffnet, in dem der Ventilteller 25 des Kurzschlussventilelementes 22 von dem von dem Bauteil 26 gebildeten Ventilsitz abhebt. Erst wenn der Arbeitskolben 14 soweit ausgefahren ist, dass der Abstand zwischen der Ringschulter 31 des Übertragungselementes und dem Boden des Mittelteils 19 des Hauptventiltellers überbrückt ist, d.h. ein Leerweg, wird der Hauptventilteller 15 mitgenommen. Mit weiterer Ausfahrbewegung wird dann der Hauptventilteller 15 von seinem Ventilsitz 16 abgehoben, während der Ventilschieber 23 des Kurzschlussventilelementes 22 das Kurzschlussventil schließt.

Da die dem Kurzschlussventil zugeordneten Ventilsitze von dem Bauteil 26 gebildet werden, das mit dem Ventiloberteil 10, dem thermostatischen Arbeitselement, dem Hauptventilteller, dem Kurzschlussventilelement 22, der Rückstellfeder 28 und der Überdruckfeder 29 eine fertig montierte Baueinheit bildet, sind Bearbeitungen an dem Verbrennungsmotor und / oder das Ausbilden einer Auflagefläche für eine Feder nicht erforderlich. Die fertige Baueinheit kann bei dem Hersteller des Thermostatventils auf Funktion geprüft und eingestellt werden.

Mit dem Ausführungsbeispiel ist die Erfindung anhand eines elektrisch beheizbaren thermostatischen Arbeitselementes 12 erläutert worden. In dem Gehäuse 13 des thermostatischen Arbeitselementes ist ein elektrisches Heizelement angeordnet, dem durch den Boden des Gehäuses 13 hindurch in nicht näher dargestellter Weise elektrische Energie zugeführt werden kann. Durch Zufuhr der elektrischen Energie kann das Thermostatventil unabhängig von der Kühlmitteltemperatur geöffnet oder weiter geöffnet werden. Selbstverständlich ist die Erfindung auch vorteilhaft, wenn kein elektrisch beheizbares thermostatisches Arbeitselement vorgesehen ist.

Bei einer abgewandelten Ausführungsform wird vorgesehen, dass das thermostatische Arbeitselement 12 um 180° gedreht angeordnet ist, d.h. dass der Arbeitskolben 14 an dem Ventiloberteil 10 abgestützt ist, während dann das Gehäuse 12 aufgrund der Ausfahrbewegung des Arbeitskolbens verfahrbar ist. Der Hauptventilteller 15, der dann eine andere Form erhält, wird dann an dem Gehäuse 13 angebracht und ist mit diesem verstellbar. Ebenso wird dann das Kurzschlussventilelement 22 mit abgewandelter Form an dem Gehäuse 13 angebracht, beispielsweise an einem das Gehäuse 13 verlängernden Bolzen.

Bei einer abgewandelten Ausführungsform wird vorgesehen, dass die Rückstellfeder 28 nicht an dem Bauteil 26, sondern an einer eigenen Traverse abgestützt ist, die von den Fingern 27 gehalten ist.

Die Überdruckfeder 29 ist bei der dargestellten Ausführungsform besonders raumgünstig angeordnet. Es ist jedoch auch möglich, das Bauteil 26 auf der Seite des Ventiltellers 25 mit Fingern zu versehen, in die eine Traverse eingehängt wird, an der sich eine Überdruckfeder abstützt, deren anderes Ende gegen das Kurzschlussventilelement 22 abgestützt ist.

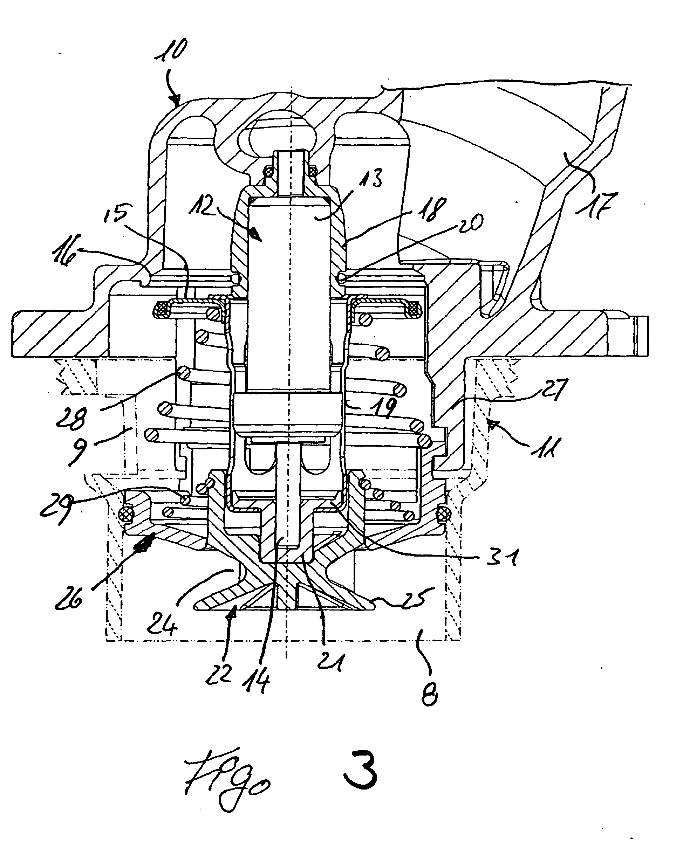

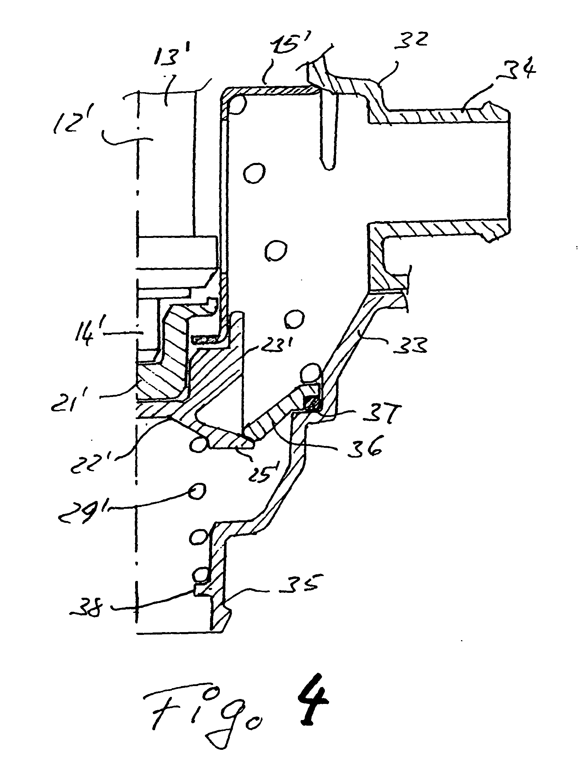

Das Thermostatventil der Ausführungsform nach Fig. 4 ist als sogenannter Gehäusethermostat ausgebildet, der außerhalb des Motorblocks oder des Zylinderkopfs eines Verbrennungsmotors im Motorraum angeordnet wird. Das Gehäuse besteht aus einem Ventiloberteil 32 und einem damit fest oder lösbar verbundenen Ventilunterteil 33. Bevorzugt werden beide aus Kunststoff hergestellt. Das Ventiloberteil ist mit einem Schlauchanschluss 34 versehen, an den ein von einer Motoraustrittsöff nung eines Verbrennungsmotors kommender Schlauch anschließbar ist. Das Ventiloberteil 32 weist ferner koaxial zu einem thermostatischen Arbeitselement 12' einen Schlauchanschluss für einen zu einem Kühlmittelkühler führenden Schlauch auf. Das Ventilunterteil 33 ist mit einem zum Arbeitselement 12' koaxialen Schlauchanschluss 35 versehen, an den ein zu einer Motoreintrittsöffnung führender Schlauch anschließbar ist. Das Gehäuse 13' des thermostatischen Arbeitselementes 12' ist entsprechend der Ausführungsform nach Fig. 1 bis 3 in dem Ventiloberteil 32 abgestützt. Der Arbeitskolben 14' nimmt bei seinem Ausfahren über ein Übvertragungsteil 21' zunächst ein Kurzschlussventilelement 22' mit und nach Durchlaufen eines Leerweges auch einen Hauptventilteller 15'.

Der Hauptventilteller 15' ist mit einer Schließfeder 28' belastet, die sich an einem ringförmigen Einsatz 36 abstützt, der in das Ventilunterteil 33 unter Zwischenfügen eines Dichtungsringes 37 eingesetzt ist. Der Einsatz 36 bildet einen Ventilsitz für einen Ventilteller 25' des Kurzschlussventilelementes 22' sowie einen Ventilsitz für einen als Ventilschieber 23' ausgebildeten Abschnitt des Kurzschlussventilelements 22'. Ebenso bildet der Einsatz 36 eine Führung für die zwischen Ventilteller 25' und Ventilschieber 23' befindlichen Versteifurigsrippen des Kurzschlussventilelements 22'. Das Kurzschlussventilelement 22' ist mit einer Überdruckfeder 29' belastet, die sich gegen einen Ringbund 38 des Ventilunterteils 33 abstützt, der im Innern des zu der Motoreintrittsöffnung gehörenden Schlauchanschlusses 35 angeordnet ist.

## Patentansprüche

1. Thermostatventil für eine Kühlanlage eines Verbrennungsmotors mit einem in einer Verteilerkammer anzuordnenden der thermostatischen Arbeitselement, das als Antriebselement für ein zwischen einem Motoraustritt und einem zu einem Kühlmittelkühler führenden Anschluss anzuordnendes Hauptventilelement und für ein zwischen dem Motoraustritt und einem Motoreintritt anzuordnendes als Ventilschieber gestaltetes Kurzschlussventilelement dient, das als Überdruckventil gestaltet ist, **dadurch gekennzeichnet, dass** das Kurzschlussventilelement (22, 22') zusätzlich zu dem Ventilschieber (23, 23') mit einem Ventilteller (25, 25') versehen ist, der in Ausfahrrichtung des thermostatischen Arbeitselementes (12, 12') dem Ventilschieber (23, 23') vorgeordnet ist, und dass dem Ventilschieber (23, 23') und dem Ventilteller (25, 25') ein Bauteil (26) zugeordnet ist, das sowohl einen Ventilsitz für den Ventilschieber (23, 23') als auch einen Ventilsitz für den Ventilteller (25, 25') bildet.

2. Thermostatventil nach Anspruch 1, **dadurch gekennzeichnet, dass** in Ausfahrrichtung des thermostatischen Arbeitselementes (12) ein Abstand zwischen dem Ventilschieber (23) und dem Ventilteller (25) des Kurzschlussventilelementes (22) vorgesehen ist.

3. Thermostatventit nach Anspruch 2, **dadurch gekennzeichnet, dass** das Kurzschlussventilelement (22) zwischen dem Ventilschieber (23) und dem Ventilteller (25) mit einer Aussparung (24) versehen ist.

4. Thermostatventil nach einem der Ansprüche 1 bis 3, **dadurch gekennzeichnet, dass** das gemeinsame Bauteil (26) an einer vorgegebenen Position dichtend in eine Aufnahme eines Motorblockes oder eines Zylinderkopfs einsetzbar ist.

5. Thermostatventil nach einem der Ansprüche 1 bis 4, **dadurch gekennzeichnet, dass** das gemeinsame Bauteil (26) als Abstützung für eine Rückstellfeder (28) des Hauptventilelementes (15) dient.

6. Thermostatventil nach einem der Ansprüche 1 bis 5, **dadurch gekennzeichnet, dass** das gemeinsame Bauteil (26) als Abstützung für eine Überdruckfeder (29) dient.

7. Thermostatventil nach Anspruch 6, **dadurch gekennzeichnet, dass** die Überdruckfeder (29) an dem Kurzschlussventilelement (22) fixiert ist.

8. Thermostatventil nach einem der Ansprüche 1 bis 7, **dadurch gekennzeichnet, dass** ein Ventiloberteil (10) mit dem thermostatischen Arbeitselement (12) dem Hauptventilelement (15), der Rückstellfeder (28), dem Kurzschlussventilelement (22), der Überdruckfeder (29) und dem den Ventilsitz für das Kurzschlussventilelement (22) bildenden Bauteil (26) eine vorgefertigte Baueinheit bildet.

9. Thermostatventil nach Anspruch 8, **dadurch gekennzeichnet, dass** das Ventiloberteil (10) mit sich in Ausfahrrichtung des thermostatischen Arbeitselementes (12) erstreckenden Fingern (27) versehen ist, an welcher das Bauteil (26) gehalten ist.

10. Thermostatventil nach einem der Ansprüche 1 bis 3, **dadurch gekennzeichnet, dass** es als ein mit Schlauchanschlüssen (34, 35) versehener Gehäusethermostat ausgebildet ist.

## Claims

1. Thermostatic valve for a cooling system of an internal combustion engine, having a thermostatic operating element to be arranged in a distributing chamber and which is used as the drive element for a main valve element to be arranged between an engine outlet and a connector leading to a coolant cooler, and for a bypass valve element designed as a valve slide to be arranged between the engine outlet and an engine inlet and which is designed as a pressure relief valve, **characterized in that** the bypass valve element (22, 22') is provided additionally to the valve slide (23, 23') with a valve disc (25, 25') which is arranged upstream of the valve slide (23, 23') in the extension direction of the thermostatic operating element (12, 12'), and **in that** a component (26) is assigned to the valve slide (23, 23') and the valve disk (25, 25') that forms both a valve seat for the valve slide (23, 23') and a valve seat for the valve disk (25, 25').

2. Thermostatic valve according to Claim 1, **characterized in that** a clearance is provided between the valve slide (23) and the valve disk (25) of the bypass valve element (22) in the extension direction of the thermostatic operating element (12).

3. Thermostatic valve according to Claim 2, **characterized in that** the bypass valve element (22) is provided with a recess (24) between the valve slide (23) and the valve disk (25).

4. Thermostatic valve according to one of Claims 1 to 3, **characterized in that** the common component (26) is insertable at a predetermined position into a receptacle of an engine block or of a cylinder head in sealing manner.

5. Thermostatic valve according to one of Claims 1 to 4, **characterized in that** the common component (26) acts as a support for a return spring (28) of the main valve element (15).

6. Thermostatic valve according to one of Claims 1 to 5, **characterized in that** the common component (26) acts as a support for a pressure relief spring (29).

7. Thermostatic valve according to Claim 6, **characterized in that** the pressure relief spring (29) is fixed on the bypass valve element (22).

8. Thermostatic valve according to one of Claims 1 to 7, **characterized in that** a valve upper element (10) forms a prefabricated structural unit with the thermostatic operating element (12), the main valve element (15), the return spring (28), the bypass valve element (22), the pressure relief spring (29) and the component (26) forming the valve seat for the bypass valve element (22).

9. Thermostatic valve according to Claim 8, **characterized in that** the valve upper element (10) is provided with fingers (27) extending in the extension direction of the thermostatic operating element (12) and on which fingers the component (26) is held.

10. Thermostatic valve according to one of Claims 1 to 3, **characterized in that** it is designed as a housing-type thermostat provided with hose connectors (34, 35).

## Revendications

1. Soupape thermostatique pour un système de refroidissement d'un moteur thermique, avec un élément thermostatique actif devant être placé dans une chambre de distribution et qui sert d'élément d'entraînement pour un élément principal de soupape devant être placé entre une sortie du moteur et un raccord menant à un refroidisseur du liquide de refroidissement, et pour un élément de soupape court-circuiteur conçu comme tiroir de soupape devant être placé entre la sortie du moteur et une entrée du moteur, et conçu comme soupape de surpression, **caractérisée en ce que** l'élément de soupape court-circuiteur (22, 22') est muni, en plus du tiroir de soupape (23, 23'), d'une tête de soupape (25, 25') disposée en amont du tiroir de soupape (23, 23') dans le sens de déploiement de l'élément thermostatique actif (12, 12'), et qu'au tiroir de soupape (23, 23') et à la tête de soupape (25, 25') est associé un composant (26) qui constitue à la fois un siège de soupape pour le tiroir de soupape (23, 23') et un siège de soupape pour la tête de soupape (25, 25').

2. Soupape thermostatique selon la revendication 1, **caractérisée en ce que** dans le sens de déploiement de l'élément thermostatique actif (12) est prévu un intervalle entre le tiroir de soupape (23) et la tête de soupape (25) de l'élément de soupape court-circuiteur (22).

3. Soupape thermostatique selon la revendication 2, **caractérisée en ce que** l'élément de soupape court-circuiteur (22) comporte un évidement (24) entre le tiroir de soupape (23) et la tête de soupape (25).

4. Soupape thermostatique selon l'une des revendications 1 à 3, **caractérisée en ce que** sur une position prédéfinie, le composant commun (26) est insérable de manière assurant l'étanchéité dans un logement d'un bloc-moteur ou d'une culasse de cylindres.

5. Soupape thermostatique selon l'une des revendications 1 à 4, **caractérisée en ce que** le composant commun (26) sert d'appui à un ressort de rappel (28) de l'élément principal de soupape (15).

6. Soupape thermostatique selon l'une des revendications 1 à 5, **caractérisée en ce que** le composant commun (26) sert d'appui à un ressort de surpression (29).

7. Soupape thermostatique selon la revendication 6, **caractérisée en ce que** le ressort de surpression (29) est fixé à l'élément de soupape court-circuiteur (22).

8. Soupape thermostatique selon l'une des revendications 1 à 7, **caractérisée en ce qu'**une partie supérieure de soupape (10) forme une unité modulaire préfabriquée avec l'élément thermostatique actif (12), l'élément principal de soupape (15), le ressort de rappel (28), l'élément de soupape court-circuiteur (22), le ressort de surpression (29) et le composant (26) formant le siège de soupape pour l'élément de soupape court-circuiteur (22).

9. Soupape thermostatique selon la revendication 8, **caractérisée en ce que** la partie supérieure de soupape (10) est munie de doigts (27) s'étendant dans le sens de déploiement de l'élément thermostatique actif (12), sur lesquels est maintenu le composant (26).

10. Soupape thermostatique selon l'une des revendications 1 à 3, **caractérisée en ce qu'**elle est formée comme thermostat incorporé dans un boîtier muni de raccords de tuyaux (34, 35).
